(19) Europäisches Patentamt

European Patent Office

Office européen des brevets

(11) **EP 3 893 374 B1**

(12) **EUROPEAN PATENT SPECIFICATION**

(45) Date of publication and mention
of the grant of the patent:
**06.08.2025 Bulletin 2025/32**

(21) Application number: **20168493.3**

(22) Date of filing: **07.04.2020**

(51) International Patent Classification (IPC):
*H02M 3/158* (2006.01)   *H02J 3/38* (2006.01)
*H02J 1/10* (2006.01)   *H02J 7/35* (2006.01)
*H02M 1/00* (2006.01)

(52) Cooperative Patent Classification (CPC):
**H02M 3/158; H02J 1/106; H02J 1/108; H02J 3/381; H02J 7/35; H02J 2300/26; H02M 1/009; Y02E 10/56**

(54) **POWER CONVERTER SYSTEMS WITH INTEGRATED ENERGY STORAGE**

STROMRICHTERSYSTEME MIT INTEGRIERTER ENERGIESPEICHERUNG

SYSTÈMES DE CONVERTISSEUR DE PUISSANCE AVEC STOCKAGE D'ÉNERGIE INTÉGRÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.10.2021 Bulletin 2021/41**

(73) Proprietor: **GE Energy Power Conversion Technology Ltd**
**Rugby, Warwickshire CV21 1BD (GB)**

(72) Inventor: **CRANE, Allan David**
**Rugby**
**Warwickshire CV21 1BU (GB)**

(74) Representative: **Openshaw & Co.**
**8 Castle Street**
**Farnham, Surrey GU9 7HR (GB)**

(56) References cited:
WO-A1-2019/092305   CN-U- 203 734 364
JP-A- H0 951 683   US-A1- 2009 310 385

• **DAS MOUMITA ET AL: "A novel control strategy for stand-alone solar PV systems with enhanced battery life", 2014 IEEE APPLIED POWER ELECTRONICS CONFERENCE AND EXPOSITION - APEC 2014, IEEE, 16 March 2014 (2014-03-16), pages 2880 - 2887, XP032591191, DOI: 10.1109/APEC.2014.6803713**

## Description

### Technical Field

The present invention relates to power converter systems, and in particular to power converter systems with integrated energy storage that can convert a direct current (DC) voltage to an alternating current (AC) voltage that can be exported to an AC power network or utility grid, for example.

### Background Art

In a typical solar power plant a plurality of solar photovoltaic (PV) panels - sometimes referred to collectively as a PV array - are connected to a converter which converts the DC voltage generated by the PV array into an AC voltage that can be exported to an AC power network or utility grid, for example.

The cost of PV panels is falling and there is a general desire to oversize the power rating of the PV array as compared with the power rating of the converter in order to maximise energy output, particular in countries with high variability in solar insolation such as the United Kingdom.

The converter is usually modulated to apply the ideal load impedance to the connected PV array in order to deliver the maximum possible power to the AC power network or utility grid at any time. This modulation control is typically referred to as Maximum Power Point (MPP) tracking. When the power generated by an oversized PV array reaches the power rating of the converter, the converter loses the ability to track the MPP. In this case, the converter must apply so-called "clipping" where available generated PV power is wasted and is not exported to the AC power network or utility grid. It is known to store this surplus power in an energy store, e.g., a battery.

WO 2019/092305 A1 discloses a power converter for an electric power plant that comprises an inverter-bridge, a network filter for connecting the inverter-bridge to an alternating voltage power grid, and a controller for controlling, in a first operating mode, the inverter-bridge to transfer energy from a direct voltage energy storage to the alternating voltage power grid. CN203734364U discloses a system, comprising: a boosting circuit, a converter, a bidirectional DC converter, a first switching tube and a second switching tube; the input end of the boosting circuit is connected to the photovoltaic module PV; an output end of the boosting circuit is connected to an input end of the converter; an output end of the boosting circuit is connected to a high voltage end of the bidirectional DC converter through the second switching tube; the PV is connected to the high voltage end of the bidirectional DC converter through the first switch tube; the low voltage end of the bidirectional DC converter is connected to a battery.

### Summary of the invention

The invention is defined by the appended claims. Claim 1 defines a power converter system, claim 7 defines a power system, and claim 14 defines a method. In the following, apparatus and/or methods referred to as embodiments that nevertheless do not fall within the scope of the claims should be understood as examples useful for understanding the invention.

The present invention provides a power converter system comprising:

first and second direct current (DC) buses connectable at a first end to an energy source and at a second end to a load;
a third DC bus;
a DC/DC converter comprising:

first and second controllable semiconductor devices connected in series between the second and third DC buses, each semiconductor device including a semiconductor switch and an anti-parallel connected diode, and
a reactor connected between the first DC bus and the junction of the series-connected first and second semiconductor devices; and

a DC energy store connected between the second and third DC buses in parallel with the series-connected first and second semiconductor devices.

The DC/DC converter can further comprise a capacitor connected between the second and third DC buses in parallel with the DC energy store and the series-connected first and second semiconductor devices.

The reactor can be a saturable reactor.

The first and second semiconductor switches can be of any suitable type, e.g., IGBTs, and are controlled to turn on and off by a controller as described in more detail below.

The first and third DC buses can have a first polarity (e.g., positive DC buses) and the second DC bus can have a second polarity that is opposite to the first polarity (e.g., a negative DC bus).

The present invention further provides a power system comprising:

the power converter system described above;
an energy source connected to the first end of the first and second DC buses; and
a load connected to the second end of the first and second DC buses.

The energy source preferably has a high internal impedance. As used herein, the term "high internal impedance" may be defined as an internal impedance that experiences a voltage drop of at least 10% of the rated open circuit voltage of the energy source when delivering the rated source current. The energy source preferably has the ability to operate continuously with a source current in excess of its rated source current. In practice, the present invention can exploit this ability to ensure that there is sufficient internal voltage drop in the energy source to prevent an excessive DC link voltage from damaging the load - see below. It is also preferable that the internal impedance of the energy source increases when the source current increases beyond the rated source current.

The energy source can comprise one or more DC energy sources and/or one or more AC energy sources. If the energy source comprises one or more AC energy sources, it will also include one or more AC/DC converters to convert an AC voltage to a DC voltage or *vice versa* so that the energy source as a whole can be defined with first and second DC terminals that are connected respectively to the first end of the first and second DC buses by a first DC circuit. The energy source can also comprise one or more DC/DC converters. Each DC energy source can comprise a solar photovoltaic (PV) panel or an array of PV panels, a flow battery such as a redox or hybrid flow battery, or a fuel cell such as a proton exchange membrane or solid oxide fuel cell, for example. Each AC energy source can comprise an electrical machine (e.g., a rotating or linear generator) and associated components specifically designed to have a high internal resistance and/or reactance. The energy source will be capable of providing energy and can also be capable of storing or using energy - e.g., storing energy in a flow battery or using energy by operating an electrical machine in a motoring mode. The energy provided by the energy source can be supplied to the load and/or used to charge the DC energy store.

The load will be capable of storing or using energy and can also be capable of providing energy. Energy provided by the load can be used to charge the energy source - if it is also capable of storing or using energy - and/or the DC energy store. The load can comprise one or more DC loads and/or one or more AC loads. If the load comprises one or more AC loads, it will also include one or more DC/AC converters to convert a DC voltage to an AC voltage or *vice versa* so that the load as a whole can be defined with first and second DC terminals that are connected respectively to the second end of the first and second DC buses by a second DC circuit. The load can also comprise one or more DC/DC converters. Each DC load can comprise a battery, a flow battery, a fuel cell, a capacitor, an ultracapacitor etc. Each AC load can comprise an electrical machine (e.g., a rotating or linear motor) that can be operated in a motoring mode or in a regenerative mode to provide energy.

The load can comprise an AC power network or utility grid which can be connected to the second DC circuit by a grid-side converter (e.g., a DC/AC converter). Power flow in the power converter system and the grid-side converter can be independently controlled. The power flows can be controlled to optimise the load impedance applied to the energy source, for example. The grid-side converter can comprise first and second DC terminals that are connected respectively to the first and second DC buses by the second DC circuit. The grid-side converter can comprise at least one AC terminal connected to the AC power network or utility grid by an AC circuit. The AC circuit can comprise one or more of a transformer, AC filter, protective switchgear, circuit breaker etc. The AC circuit can have any suitable number of phases, but three phases would be typical with the grid-side converter having three AC output terminals. The grid-side converter can comprise a plurality of controllable semiconductor switches (e.g., IGBTs) that can be arranged in any suitable topology and are controlled to turn on and off by a controller to convert the DC voltage at the DC terminals of the grid-side converter to an AC voltage at the AC terminal(s) or *vice versa.* The grid-side converter will normally be operated as an inverter to convert a DC input voltage from the power converter system to an AC output voltage which can be exported to the AC power network or utility grid. But in some cases, the grid-side converter can be operated as an active rectifier to convert an AC input voltage from the AC power network or utility grid to a DC output voltage which can be used to charge the energy source - if it is also capable of storing or using energy - and/or the DC energy store.

The power converter system of the present invention may be particularly useful where the energy source is an oversized PV array comprising a plurality of connected PV panels where the rated power of the PV array is greater than the rated power of the grid-side converter, for example.

The DC energy store can store and provide energy. The DC energy store can comprise one or more of a battery, a flow battery, a capacitor, an ultracapacitor etc. The DC energy store can be charged from the energy source. The DC energy store can also be charged from the load if it is capable of providing energy - e.g., from the AC power network or utility grid through the grid-side converter if it is capable of being operated as an active rectifier. The energy stored in the DC energy store can be discharged to the load - e.g., to supplement any energy provided by the energy source. The DC energy store can also be discharged to the energy source if the energy source is also capable of storing or using energy.

Charging and discharging of the DC energy store is controlled by the DC/DC converter. In particular, the first and second semiconductor switches of the DC/DC converter may be controlled to turn on and off by a controller to control the power flow into or out of the DC energy store.

The controller can use a pulse width modulation (PWM) control scheme to control the switching of the first and second semiconductor switches depending on the operating mode or requirements of the power converter system. The PWM control scheme will have a switching period and mark-space ratio. One or both of the switching period and the mark-space ratio can be selectively varied by the controller to control the power flow into or out of the DC energy store.

The following discussion focuses on three particular operating modes of the power converter system. The skilled person will understand that other operating modes of the power converter system are possible. In the three particular operating modes discussed below, it is assumed that energy is provided by the energy source and is being supplied to the load. It may be assumed, for example, that in the case of a solar plant the energy source is a PV array that should be operated with Maximum Power Point (MPP) tracking and that the load is an AC power network or utility grid that is connected to the second end of the first and second DC buses by a grid-side converter that is being operated as an inverter. These assumptions are without any limitation on the generality of the overall description of the power converter system and its operating modes. For example, it should also be noted that other energy sources may also be operated with MPP tracking, that different energy sources and loads may be used, and that energy may be provided by the load and supplied to the energy source in some circumstances.

As used herein, the term "source current" may be defined as the DC current that is provided by the energy source and the term "load current" may be defined as the DC current provided to the load by the power converter system - i.e., the output current of the power converter system. In the context of the energy source, the terms "rated current" and "rated power" may be defined as the maximum DC current and power that the energy source is capable of providing, e.g., under standard test conditions. The term "short circuit current" may be defined as the DC current provided by the energy source when its DC terminals are short circuited. The term "source voltage" may be defined as the DC voltage that is provided by the energy source and the term "DC link voltage" may be defined as the DC voltage across the DC terminals of the load.

The source current will generally be variable and not always predictable. For example, in the case of a PV array, the source current will depend on the variability in solar insolation.

The load impedance will also generally be variable and not always predictable. For example, in the case of a grid-side converter, the load impedance will depend on the operating characteristics of the grid-side converter and/or the AC power network or utility grid.

The efficiency of power transfer from the PV array will depend on both the solar insolation and the electrical characteristics of the load - where here the load might include the power converter system and the grid-side converter since both are effectively connected to the DC terminals of the energy source. Because the DC energy store is connected to the energy source and the load by the DC/DC converter, the power converter system can provide MPP tracking to change the electrical characteristics of the load to optimise efficiency of the solar plant. In particular, MPP tracking can be achieved by controlling the DC/DC converter to charge or discharge the DC energy store in response to changes in the source current and/or the load current requirements.

*First mode:*

In a first operating mode, the energy source capability does not exceed load requirements - i.e., the source current is less than or equal to the current requirements of the load. The DC energy store is also not fully discharged.

If the source current is less than the current requirements of the load, the DC/DC converter can be controlled to discharge the DC energy store to supplement the source current. Increasing the power flow from the DC energy store to the load will increase the load current supplied by the power converter system so that it is substantially equal to the current requirements of the load. The current discharged from the DC energy store is added to the source current to define the load current.

When the DC energy store is being discharged, the DC/DC converter can be operated in a buck converter mode. The first semiconductor switch (i.e., the switch that is connected to the third DC bus) can be sequentially turned on and off according to the PWM control scheme. When the first semiconductor switch is turned on, current will build up in the reactor. When the first semiconductor switch is turned off, the stored current in the reactor diverts into the anti-parallel diode of the second semiconductor switch (i.e., the switch that is connected to the second DC bus) where it is added to the source current as a discharging current. The second semiconductor switch will normally remain turned off during the first operating mode.

The power flow through the DC/DC converter when discharging the DC energy store can be controlled by varying the mark-space ratio of the PWM control scheme - i.e., the time for which the first semiconductor switch is turned on divided by the time for which the first semiconductor switch is turned off for each switching period. (This can also be considered in terms of a varying a duty cycle of the PWM control scheme, which is the time for which the first semiconductor switch is turned on divided by the switching period.)

*Second mode:*

In a second operating mode, the energy source capability exceeds load requirements - i.e., the source current is greater than the current requirements of the load. The DC energy store is also not fully charged.

The DC/DC converter can be controlled to charge the DC energy store to decrease the load current in order to meet the load requirements. In particular, the current used to charge the DC energy store is subtracted from the source current to define the load current.

When the DC energy store is being charged, the DC/DC converter can be operated in a boost converter mode. The second semiconductor switch (i.e., the switch that is connected to the second DC bus) can be sequentially turned on and off according to the PWM control scheme. When the second semiconductor switch is turned on, current will build up in the reactor. When the second semiconductor switch is turned off, the stored current in the reactor diverts into the anti-parallel diode of the first semiconductor switch (i.e., the switch that is connected to the third DC bus) as a charging current to charge the DC energy store. The first semiconductor switch will normally remain turned off during the second operating mode.

The power flow into the DC energy store to charge the DC energy store is given by:

$$P = Li2_{pk}^2/2(t1 + t2)$$

where:

L is the inductance of the reactor,
$i2_{pk}$ is the peak current in the reactor when the second semiconductor switch is turned on, and
($t1$ + $t2$) is the switching period of the PWM control scheme.

In particular, $t1$ is the time for which the second semiconductor switch is turned off by the controller and $t2$ is the time for which the second semiconductor switch is turned on by the controller.

The switching period of the PWM control scheme is often fixed and so the mark-space ratio is often varied to control the power flow into the DC energy store in order to control the charging of the DC energy store. The power flow into the DC energy store can be increased by increasing $t2$ and *vice versa.* Increasing the power flow from the energy source to the DC energy store will reduce the load current so that it is substantially equal to the current requirements of the load. However, it will be understood that if the energy source has a high internal impedance, as in the case of a PV array, for example, he peak current $i2_{pk}^2$ becomes asymptotic at the short circuit current of the energy source. This means that as the peak current in the reactor approaches the short circuit current of the energy source, the effect of increasing $t2$ becomes ineffective as a way of increasing the power flow into the DC energy store. In other words, if the energy source has a high internal impedance, a maximum power flow condition will be reached above which any further increase in $t2$ will have no practical effect on the power flow into the DC energy store and hence on the load current of the power converter system. This value of $t2$ is associated with maximum power transfer into the DC energy store and can be defined herein as $t2_{max}$. In practice, there is normally a requirement for the DC/DC converter to be designed to allow at least the maximum output power of the energy source to be transferred to the DC energy store whilst $t2$ remains within its effective range because the load requirements may be zero and the DC/DC converter will then preferably provide MPP tracking control.

Increasing the power flow to the DC energy store decreases the load impedance that is applied to the energy source and *vice versa* - where here the load might include the power converter system and the connected load since both are effectively connected to the DC terminals of the energy source. For some energy sources, e.g., a PV array, the source voltage will decrease significantly if the load impedance decreases. In other circumstances, the energy source may suffer reduced output capability, e.g., in a PV array, if solar insolation reduces then the source voltage will decrease significantly. To prevent collapse of the DC link voltage in these circumstances it is necessary to control the mark-space ratio of the PWM control scheme in order to reduce the power flow to the DC energy store. In practice, $t2$ control must remain effective throughout changes in load impedance and energy source capability in order to provide continuous control of the MPP tracking.

It will also be understood that the power converter system cannot be continuously operated in the second operating mode because the DC energy store will eventually become fully charged. In some cases, the DC energy store can be discharged to the load or to the energy source if it is capable of storing or using energy. This discharging of the DC energy store can be carried out as a specific operating mode or by the power converter system alternating between the first and second operating modes over a period of time so that the DC energy store is alternately charged and discharged within normal charge storage limits. But in other cases, if the DC energy store becomes fully charged, it may not always be possible to discharge it immediately, and the DC/DC converter must then be controlled appropriately to prevent any further charging of the DC energy store until it can be discharged.

*Third (protective) mode:*

In a third operating mode, the energy source capability exceeds load requirements and the DC energy store is fully charged. Such an operating mode may be considered to be a protective mode because it can prevent the DC energy store from being damaged by further charging whilst also preventing the load (e.g., the grid-side converter) from being damaged by an excessive DC link voltage.

Although the third operating mode can be generally considered to apply to any situation where energy source capability exceeds the load requirements, there is a particular situation where the current requirements of the load are zero or substantially zero - e.g., because of a fault in the AC power network or utility grid, or in the grid-side converter. Such a reduction in the load requirements may happen very rapidly. If the current requirements of the load fall to zero or substantially zero, it will be necessary to try and reduce the load current to zero or substantially zero.

If the DC energy store is fully charged, the DC/DC converter must be controlled to prevent any further charging of the DC energy store. Otherwise the DC energy store will be damaged. If the DC energy store was already being charged, the DC/DC converter can be controlled to decrease $t2$ to zero - i.e., so that the second semiconductor switch is constantly turned off - in order to reduce the power flow into the DC energy store to zero. The first semiconductor switch would also be turned off. This would mean that the open circuit voltage of the energy source would be applied to the load. This will damage the load if the open circuit voltage is in excess of what the load can safely withstand, which will often be the case if the energy source is an oversized PV array and the load is a grid-side converter with a lower rated power.

The DC/DC converter can therefore be controlled instead to increase $t2$ beyond the level that is associated with maximum power transfer into the DC energy store (i.e., $t2 > t2_{max}$) and, in the limit case, to the point where $t1$ is substantially zero. In the limit case, this means that the second semiconductor switch is turned on substantially constantly such that the mean value of current that is diverted into the anti-parallel diode of the first semiconductor switch when the second semiconductor switch is turned off during $t1$ is substantially zero. In other words, the power flow into the DC energy store is reduced to substantially zero. The switching period of the PWM control scheme can then be increased. In practice, the switching frequency of the PWM control scheme - which is the inverse of the switching period - can be decreased to zero. The second semiconductor switch is then constantly turned on. The first semiconductor switch will normally remain turned off during the third operating mode.

The DC/DC converter effectively provides a short circuit current path between the first and second DC buses and hence across the DC terminals of the energy source. The short circuit current path includes the reactor and the second semiconductor switch which is constantly turned on. The source current is the short circuit current of the energy source and the source voltage is zero.

The DC/DC converter can have $t2$ and $t1$ continuously adjusted to allow the load impedance that is applied to the energy source to be controlled anywhere between the above-mentioned maximum power condition and the short circuit condition (and in fact as far as the open circuit condition in some circumstances).

The third operating mode can avoid the need to physically isolate the load from the energy source because suitable isolation systems are typically physically large, expensive and not fast-acting. They can also have a limited number of operating cycles. In contrast, transitioning the power converter system to the third operating mode provides a fast-acting response without any limit on the number of operating cycles.

The present invention further provides a method of operating a power converter system described above in the protective mode, wherein the first and second semiconductor devices are switched according to a PWM control scheme with a switching period and switching frequency. The method comprises the steps of:

increasing $t2$ beyond a level that is associated with maximum power transfer into the DC energy store, and optionally until $t1$ is substantially zero, and decreasing the switching frequency of the PWM control scheme to zero so that the second semiconductor switch is constantly turned on to create a short circuit current path between the first and second DC buses of the power converter system.

An optional third controllable semiconductor switch (e.g., IGBT) can be connected between the first and second DC buses, in parallel with the series-connected reactor and second semiconductor switch. The third semiconductor switch can be turned on and off by the controller. When the third semiconductor switch is turned on, it creates a short circuit current path between the first and second DC buses and hence across the DC terminals of the energy source. The short circuit current path is in addition to the short circuit current path created through the DC/DC converter by the third operating mode and which includes the reactor and the second semiconductor switch that is constantly turned on by the PWM control scheme. The third semiconductor switch can be turned on after the short circuit current path through the DC/DC converter has been established. The third semiconductor switch can be connected in series with a resistor for dissipating any excess energy in the additional short circuit current path as heat.

A blocking diode can be connected in series with the energy source. The blocking diode can be provided in the first DC bus. If the load is capable of providing energy such as a grid-side converter and connected AC power network or utility grid, for example, the blocking diode will prevent the DC link voltage from the grid-side converter from feeding reverse polarity current into the energy source - e.g., to prevent reverse current flow in the PV array.

The reactor of the DC/DC converter can be connected to the first DC bus on the energy source-side of the blocking diode. The DC/DC converter can then be used to control the output of the energy source for the purpose of charging the DC energy store when the DC energy store is substantially fully discharged, e.g., when the DC energy store terminal voltage is less than the minimum DC link voltage of the grid-side converter. It also means that high voltage transients in the DC link voltage of the grid-side converter (typically those associated with high voltage grid fault ride-through) can be prevented from causing excessive surge charging currents from flowing into a substantially fully discharged DC energy store.

If the load is capable of providing energy, an optional fourth controllable semiconductor device can be connected in anti-parallel with the blocking diode and can be turned on to selectively permit the load to be used as an energy source for charging the DC energy store and/or the energy source if the energy source if capable of storing or using energy.

The present invention can provide the following benefits:

- improved through-life energy delivery from energy sources such as a PV array, relative to cost,
- greater energy conversion efficiency when the energy source capability and load requirements are mismatched or affected by variability or intermittency,
- safe and reliable operation when the energy source is oversized relative to the load, and
- mitigation of inrush currents to the DC energy store, e.g., during high voltage grid fault ride-through.

Drawings

Figure 1 is a schematic diagram showing a power system according to the present invention;

Figure 2 is a schematic diagram showing a power system according to the present invention as a solar plant;

Figure 3 is a schematic diagram showing a first operating mode of a power converter system forming part of the power system of Figure 2;

Figure 4 shows current waveforms for the first operating mode;

Figure 5 is a schematic diagram showing a second operating mode of the power converter system;

Figure 6 shows current waveforms for the second operating mode;

Figure 7 shows current waveforms for a third operating mode (or "protective mode") of the power converter system;

Figure 8 is a schematic diagram showing the third operating mode;

Figure 9 is a schematic diagram showing the third operating mode with an additional short circuit current path;

Figure 10 is a flow diagram of the third operating mode according to the present invention; and

Figure 11 shows current and voltage characteristics for the third operating mode.

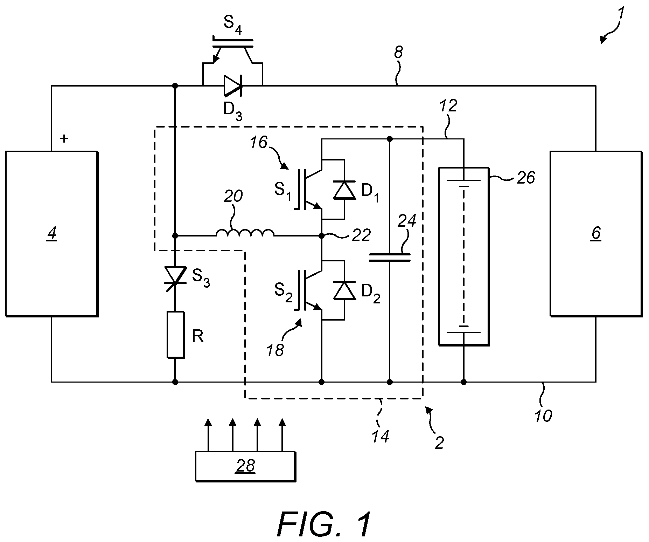

With reference to Figure 1, a power system 1 according to the present invention includes a power converter system 2 connected between an energy source 4 and a load 6.

The power converter system 2 includes first and second direct current (DC) buses 8, 10. The first and second DC buses 8, 10 are connected at a first end to the energy source 4 and at a second end to the load 6.

The power converter system 2 includes a third DC bus 12.

The power converter system 2 includes a DC/DC converter 14.

The DC/DC converter 14 includes:

- first and second controllable semiconductor devices 16, 18 connected in series between the second and third DC buses 10, 12,
- a reactor 20 connected between the first DC bus 8 and the junction 22 of the series-connected first and second semiconductor devices 16, 18, and
- a capacitor 24 connected between the second and third DC buses 10, 12 in parallel with the series-connected first and second semiconductor devices 16, 18.

The power converter system 2 include a DC energy store 26 connected between the second and third DC buses 10, 12 in parallel with the series-connected first and second semiconductor devices 16, 18.

Each semiconductor device 16, 18 includes a semiconductor switch $S_1$, $S_2$ and an anti-parallel connected diode $D_1$, $D_2$. The first and second semiconductor switches $S_1$, $S_2$ can be of any suitable type, e.g., IGBTs, and are controlled to turn on and off by a controller 28 as described in more detail below.

An optional third controllable semiconductor switch $S_3$ and series-connected resistor R are connected between the first and the second DC buses 8, 10 in parallel with the reactor 20 and the second semiconductor switch $S_2$. The third semiconductor switch $S_3$ can be of any suitable type, e.g., a thyristor, and is controlled to turn on by the controller 28 as described in more detail below to provide a short circuit current path between the first and second DC buses 8, 10. The resistor R can be used to dissipate energy in the short circuit current path as heat. The short circuit current path containing the third controllable switch $S_3$ and the resistor R can have a similar resistance to the short circuit current path containing the second semiconductor switch $S_2$ but a higher dissipation capacity.

The first DC bus 8 includes a blocking diode $D_3$ and an anti-parallel connected fourth controllable semiconductor switch $S_4$. The fourth semiconductor switch $S_4$ can be of any suitable type, e.g., IGBT, and is controlled to turn on and off by the controller 28 as described in more detail below. The reactor 20 is connected to the first DC bus 8 on the energy source-side of the blocking diode $D_3$ as shown. It will be understood that the blocking diode $D_3$ and the fourth controllable switch $S_4$ are optional features of the power converter system 2. The fourth controllable switch $S_4$ would not be included without the blocking

diode $D_3$ and is only needed if there is a requirement to charge the DC energy store 26 or the energy source 4 from the load 6 - see further comments below. The blocking diode $D_3$ is only needed if there is a risk that the DC link voltage is sufficiently high to cause an excessive surge current in the reactor 20, the diode $D_1$ and the DC energy store 26.

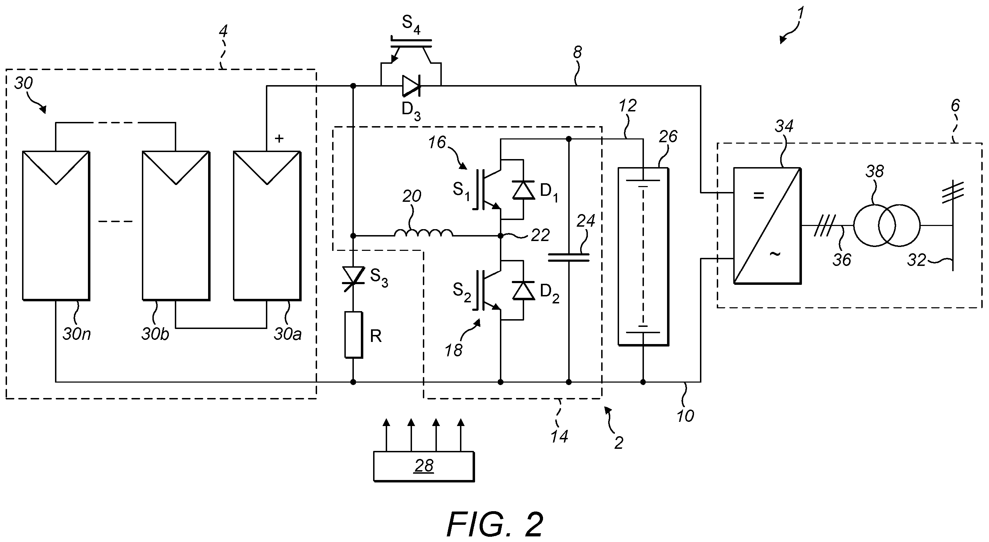

Figure 2 shows an example of a power system 1 in the form of a solar plant. It will be readily understood that a solar plant is only one possible power system and that other examples of power systems can use different energy sources, loads etc.

In this example, the energy source 4 includes an oversized array of photovoltaic (PV) panels 30a, 30b, ..., 30n with high internal impedance. The PV array 30 should be operated with Maximum Power Point (MPP) tracking. The load 6 includes an AC power network or utility grid 32 and a grid-side converter 34. The grid-side converter 34 has three AC terminals connected to the AC power network or utility grid by an AC circuit 36. The AC circuit 36 includes a transformer 38 and can also include an AC filter, protective switchgear, circuit breaker etc. which are not shown in Figure 2. The grid-side converter 34 includes a plurality of controllable semiconductor switches (e.g., IGBTs) that can be arranged in any suitable topology and are controlled to turn on and off by a separate converter controller (not shown) to convert the DC voltage at the DC terminals of the grid-side converter to an AC voltage at the AC terminal(s) or *vice versa.* The grid-side converter 34 will normally be operated as an inverter to convert a DC input voltage from the power converter system 2 to an AC output voltage which can be exported to the AC power network or utility grid 32. But in some cases, the grid-side converter 34 can be operated as an active rectifier to convert an AC input voltage from the AC power network or utility grid 32 to a DC output voltage which can be used to charge the DC energy store 26 if the fourth semiconductor switch $S_4$ is turned on. The fourth semiconductor switch $S_4$ will normally be turned off in all other circumstances.

The control functions for the grid-side converter 34 can be functionally and/or physically integrated with the control functions for the power converter system 2. For example, instead of having a separate converter controller (not shown), the controller 28 shown in Figures 1 and 2 can also be used to control the switching of the plurality of controllable semiconductor switches of the grid-side converter 34 for power conversion operation. Switching can be controlled in a known manner by generating gate drive commands for the gate drive unit associated with each controllable semiconductor switch, including the first, second, third and fourth semiconductor switches $S_1$, $S_2$, ..., $S_4$ of the power converter system 2. Control and protective responses associated with the grid-side converter 34 can be used as advance information (or "feed-forward") for controlling the power converter system 2. For example, such advance information may be used to rapidly transition the power converter system 2 - and in particular, the DC/DC converter 14 - between different operating modes. This includes transitioning to the third operating mode (or "protective mode") described below which can prevent damage to the DC energy store 26 and the grid-side converter 34.

The blocking diode $D_3$ can prevent high voltage transients in the DC link voltage of the grid-side converter 34 (typically those associated with high voltage grid fault ride-through) from causing excessive surge charging currents from flowing into a substantially fully discharged DC energy store 34. It will be readily understood that most grid-side converter topologies include freewheel diodes that inherently cause passive rectification to occur in cases of severe high voltage grid fault ride-through and this can be one cause for high voltage transients occurring in the DC link voltage.

The DC energy store 26 can store and provide energy. The DC energy store 26 can be a battery, a flow battery, a capacitor, an ultracapacitor etc. The DC energy store 26 can be charged from the PV array 30 and also from the AC power network or utility grid 32 through the grid-side converter 34 and the fourth semiconductor switch $S_4$ as described above. When the DC energy store 26 is being charged from the PV array 30, the load current provided by the power converter system 2 is equal to the source current provided by the PV array minus the current that is supplied to the DC energy store (the "charging current") through the DC/DC converter 14. The DC energy store 26 can also be charged from the PV array 30 when the load current provided by the power conversion system 2 is zero, for example when the grid-side converter 34 is isolated or is non-functional for any reason.

The energy stored in the DC energy store 26 can be discharged to the grid-side converter 34 - e.g., to supplement the source current provided by the PV array 30. When the DC energy store 26 is being discharged, the load current is equal to the source current plus the current that is supplied from the DC energy store (the "discharging current") through the DC/DC converter 14. The load current that is supplied by the power converter system 2 to the grid-side converter 34 during operation of the power system 1 can therefore be varied by controlling the charging and discharging the DC energy store 26 depending on the current requirements of the load.

Charging and discharging of the DC energy store 26 is controlled by the DC/DC converter 14. In particular, the first and second semiconductor switches $S_1$, $S_2$ of the DC/DC converter 14 are controlled to turn on and off by the controller 28 to control the power flow into or out of the DC energy store 26.

The controller 28 uses a pulse width modulation (PWM) control scheme to control the switching of the first and second semiconductor switches $S_1$, $S_2$ depending on the operating requirements of the power converter system 2.

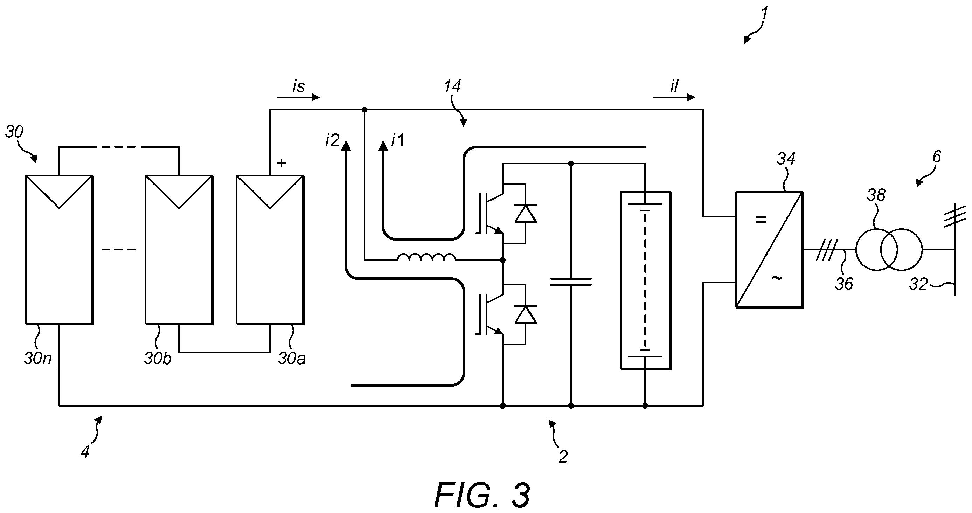

Figure 3 shows a first operating mode of the power converter system 2. It will be noted that for clarity:

- the series-connected third semiconductor switch $S_3$ and resistor R have been omitted from Figures 3, 5 and 8, and

- the third diode $D_4$ and the anti-parallel connected fourth semiconductor switch $S_4$ have been omitted from Figures, 3, 5, 8 and 9.

The source current *is* provided by the PV array 30 will depend on the variability in solar insolation.

The efficiency of power transfer from the PV array 30 will depend on both the solar insolation and the electrical characteristics of the load (i.e., the connected power converter system 2 and the grid-side converter 34). Because the DC energy store 26 is connected to the PV array 30 and the grid-side converter 34 by the DC/DC converter 14, the power converter system 2 can provide MPP tracking to change the electrical characteristics of the load to optimise efficiency of the power system 1, i.e., the solar plant. In particular, MPP tracking can be achieved by controlling the DC/DC converter 14 to charge or discharge the DC energy store 26 in response to changes in the source current *is* and/or in the current requirements of the load, i.e., the grid-side converter 34 and the connected AC power network or utility grid.

In the first operating mode shown in Figure 3, the capability of the PV array 30 does not exceed load requirements - i.e., the source current *is* is less than or equal to the current requirements of the load. The DC energy store 26 is also not fully discharged.

If the source current *is* is less than the current requirements of the load, the DC/DC converter 14 can be controlled to discharge the DC energy store 26 to supplement the source current *is.* In other words, the discharging current can be added to the source current *is* to increase the load current *il* so that it is substantially equal to the load requirements.

When the DC energy store 26 is being discharged, the DC/DC converter 14 is operated in a buck converter mode. The first semiconductor switch $S_1$ is sequentially turned on and off according to the PWM control scheme. The second semiconductor switch $S_2$ remains turned off. When the first semiconductor switch $S_1$ is turned on, current *i*1 will build up in the reactor 20. When the first semiconductor switch $S_1$ is turned off, the stored current *i*2 in the reactor 20 diverts into diode $D_2$ (i.e., the anti-parallel diode of the second semiconductor switch $S_2$) and is added to the source current *is* as the discharging current.

The power flow through the DC/DC converter 14 when discharging the DC energy store 26 can be controlled by varying the mark-space ratio of the PWM control scheme - i.e., the time *t*1 for which the first semiconductor switch $S_1$ is turned on divided by the time *t*2 for which the first semiconductor switch is turned off for each switching period.

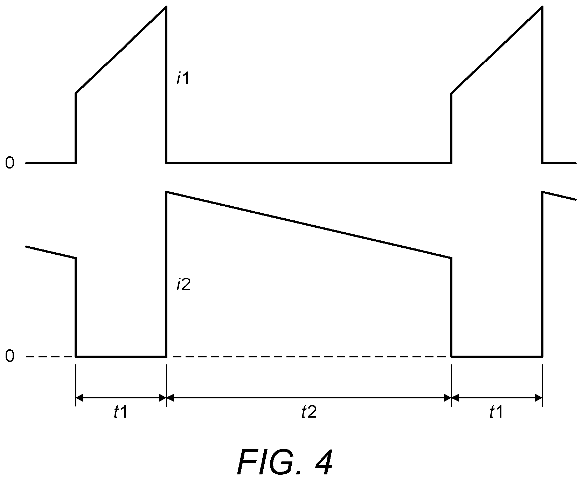

The current waveforms for *i*1 and *i*2 during the first operating mode are shown in Figure 4.

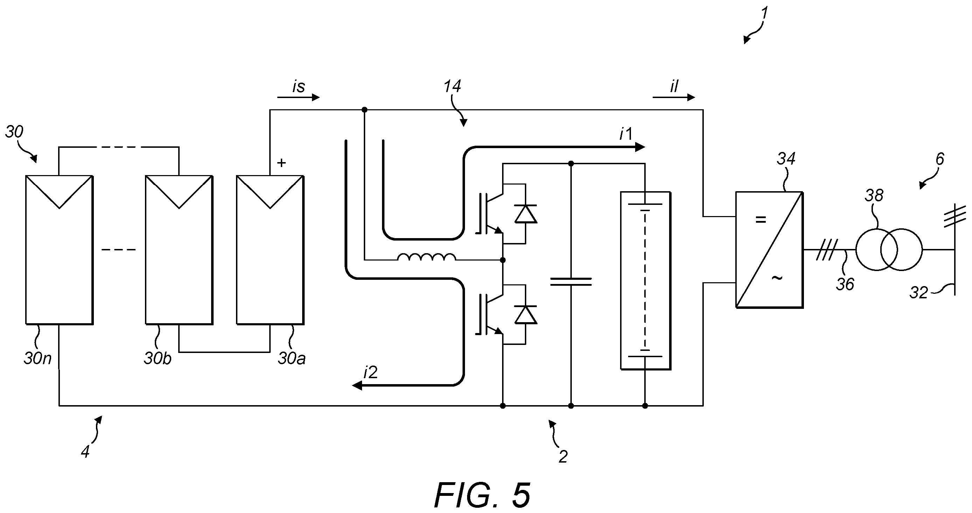

In a second operating mode shown in Figure 5,
the capability of the PV array 30 exceeds the load requirements - i.e., the source current *is* is greater than the current requirements of the load. The DC energy store 26 is also not fully charged.

The DC/DC converter 14 can be controlled to charge the DC energy store 26 to decrease the load current *il* in order to meet the load requirements. In other words, the charging current can be subtracted from the source current *is* to decrease the load current *il* so that it is substantially equal to the load requirements.

When the DC energy store 26 is being charged, the DC/DC converter 14 is operated in a boost converter mode. The second semiconductor switch $S_2$ is sequentially turned on and off according to the PWM control scheme. The first semiconductor switch $S_1$ remains turned off. When the second semiconductor switch $S_2$ is turned on, current i2 will build up in the reactor 20. When the second semiconductor switch $S_2$ is turned off, the stored current *i*1 in the reactor 20 diverts into diode $D_1$ (i.e., the anti-parallel diode of the first semiconductor switch $S_1$) to charge the DC energy store 26 as the charging current.

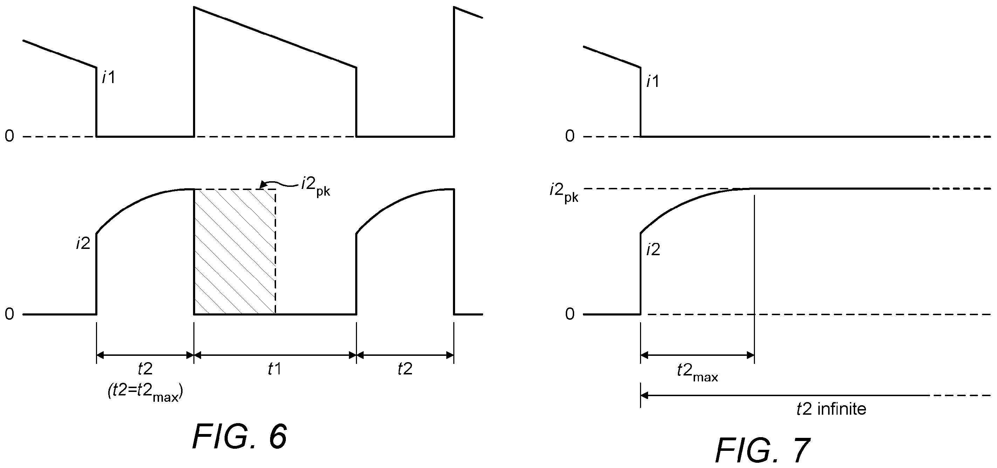

The currents waveforms for *i*1 and *i*2 during the second operating mode are shown in Figure 6.

The power flow into the DC energy store 26 to charge the DC energy store is given by:

$$P = Li2_{pk}^2/2(t1 + t2)$$

where:

L is the inductance of the reactor,
$i2_{pk}$ is the peak current in the reactor when the second semiconductor switch $S_2$ is turned on, and
($t$1 + $t$2) is the switching period of the PWM control scheme.

In particular, $t$1 is the time for which the second semiconductor switch $S_2$ is turned off and $t$2 is the time for which the second semiconductor switch $S_2$ is turned on by the controller. The first semiconductor switch $S_1$ remains turned off during the second operating mode.

The mark-space ratio is varied to control the power flow into the DC energy store 26 in order to control the charging of the DC energy store. The power flow into the DC energy store 26 can be increased by increasing $t$2 and *vice versa.* Increasing the power flow from the PV array 30 to the DC energy store 26 will reduce the load current *il* so that it is substantially equal to the current requirements of the load. However, it will be understood that if the energy source has a high internal impedance, as in the case of the PV array 30, the peak current $i2_{pk}^2$ becomes asymptotic at the short circuit current of the PV array. This means that as the peak current in the reactor 20 approaches the short circuit current of the PV array 30, the effect of increasing $t$2 becomes ineffective as a way of increasing the power flow into the DC energy store 26. In other words, a maximum power flow condition will be reached above which any further increase in t2 will have no practical effect on the power flow into the DC energy store 26 and hence on the DC output current of the power converter system 2. This is shown in Figure 6 by the dashed line for the current waveform of $i2$ and the value of $t2$ shown in Figure 6 may be considered to be $t2_{max}$, i.e., the value that is associated with maximum power transfer into the DC energy store 26. Increasing $t2$ into the shaded region shown in Figure 6, for example, will not increase the power transfer into the DC energy store 26. In a third operating mode, the capability of the PV array 30 exceeds the load requirements and the DC energy store 26 is fully charged. Such an operating mode may be considered to be a "protective mode" because it can prevent the DC energy store 26 from being damaged by further charging whilst also preventing the grid-side converter 34 from being damaged by an excessive DC link voltage. The current requirements of the load can be zero or substantially zero, e.g., because of a fault in the AC power network or utility grid 32, or in the grid-side converter 34. If the current requirements of the load fall to zero or substantially zero, it will be necessary to try and reduce the load current $il$ to zero or substantially zero as rapidly as possible.

If the DC energy store 26 is fully charged, the DC/DC converter 14 must be controlled to prevent any further charging of the DC energy store. To reduce the power flow into the DC energy store 26 to zero, the DC/DC converter 14 is controlled to increase t2 beyond the level that is associated with maximum power transfer into the DC energy store (i.e., $t2 > t2_{max}$) and, in the limit case, to the point where t1 is substantially zero. The switching period of the PWM control scheme can then be increased. In practice, the switching frequency of the PWM control scheme - which is the inverse of the switching period - can be decreased to zero. In conformity with the invention, the second semiconductor switch $S_2$ is then constantly turned on with t2 being infinite.

The current waveforms for $i1$ and $i2$ during the third operating mode are shown in Figure 7 where the second semiconductor switch $S_2$ is constantly turned on. In practice t2 is infinite and has been extended beyond the level that is associated with maximum power transfer into the DC energy store (i.e., $t2 > t2_{max}$).

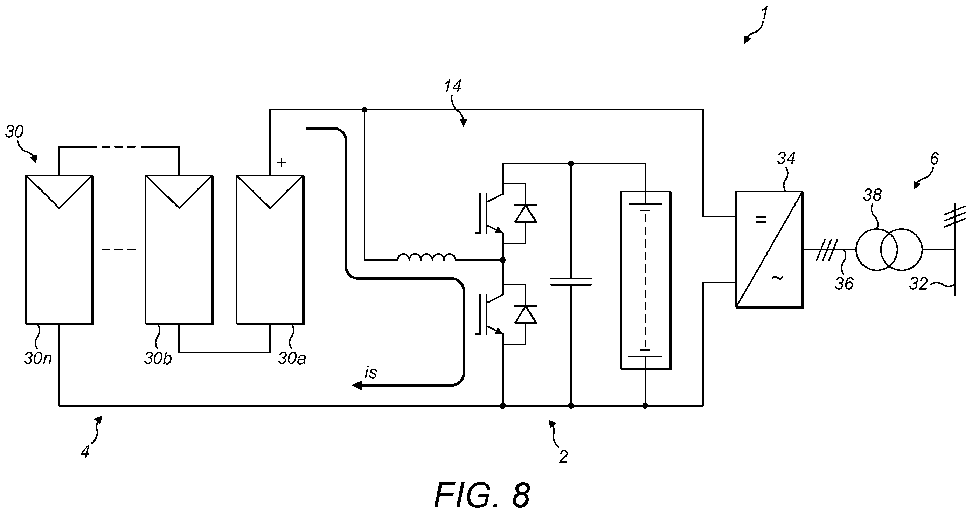

In conformity with the invention, the DC/DC converter 14 effectively creates a short circuit current path shown in Figure 8 where the source current $is$ is the short circuit current of the PV array 30 and the source voltage is zero.

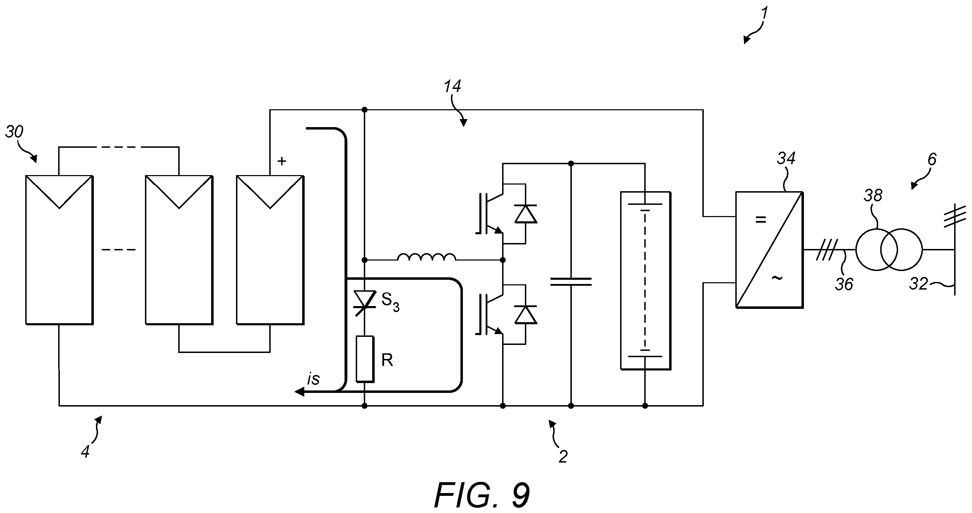

The third semiconductor switch $S_3$ can be turned on to provide an additional short circuit current path between the first and second DC buses 8, 10 as shown in Figure 9.

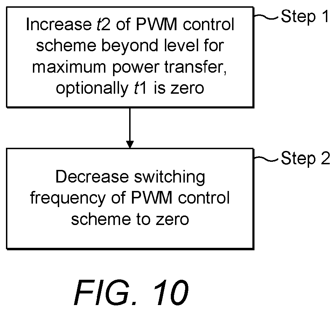

Figure 10 shows a flow diagram of the third operating mode comprising the steps of:

- Step 1: increasing $t2$ of the PWM control scheme beyond a level that is associated with maximum power transfer into the DC energy store, and optionally until $t1$ is substantially zero, and
- Step 2: decreasing the switching frequency of the PWM control scheme to zero so that the second semiconductor switch $S_2$ is constantly turned on to create a short circuit current path between the first and second DC buses 10, 12 through the reactor 20 and the second semiconductor switch $S_2$ as shown in Figure 8.

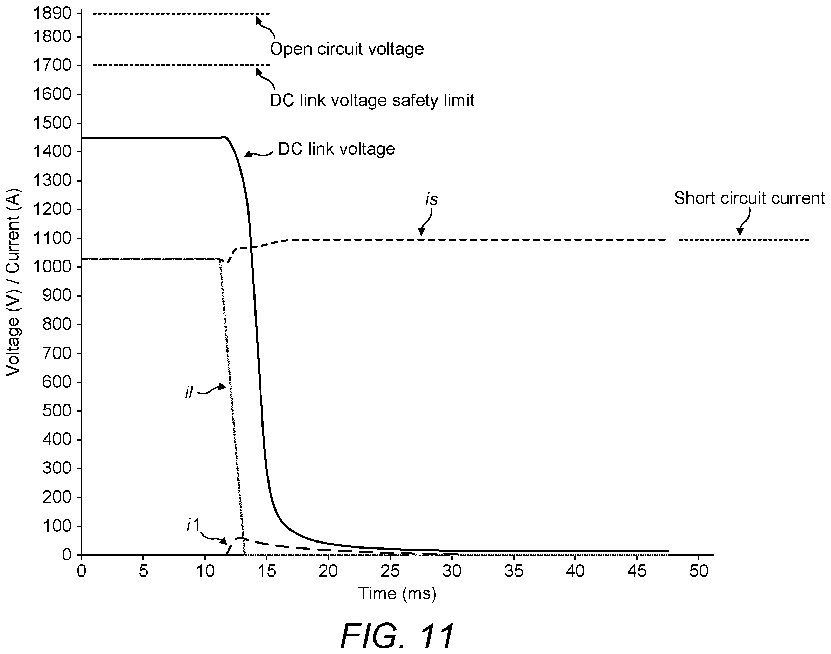

Figure 11 shows the DC link voltage across the DC terminals of the grid-side converter 34 in the event of a rapid reduction in the load current $il$ during the third operating mode (or "protective mode"). The DC/DC converter 14 controls the subsequent collapse in the DC link voltage whilst the source current $is$ stabilises at the short circuit current of the PV array. This is based on the power system having the following characteristics:

- nominal DC link voltage of 1500 V,
- open circuit voltage of 1890 V,
- short circuit current of 1100 A, and
- MPP of approximately 1.5 MW at 1500 V and this is the nominal rated power of the grid-side converter 34.

The grid-side converter 34 would be damaged if the DC link voltage exceeds 1700 V. It can therefore be seen how the third operating mode can prevent damage by rapidly reducing the DC link voltage to zero or substantially zero. This would not be the case if the DC/DC converter 14 was controlled instead to decrease $t2$ to zero - i.e., so that the second semiconductor switch $S_2$ is constantly turned off - because this would mean that the open circuit voltage of the PV array 30 would be applied to the grid-side converter 34, which exceeds the DC link voltage safety limit of 1700 V.

It can be seen that there is a small increase in the DC link voltage just before the third operating mode causes a rapid reduction in the DC link voltage. This is caused by a typically small lag or delay in the response of the controller 28 shown in Figures 1 and 2 and can be reduced if the control and protective responses associated with the grid-side converter 34 provide advance information (or "feed-forward") which can be used to transition the power converter system 2 to the third operating mode. The lag or delay can also be seen in the fact that the source current $is$ does not immediately increase when the load current $il$ starts to decrease. Similarly, the current $i1$ experiences a small increase during the lag or delay.

**Claims**

1. A power converter system (2) comprising:

first and second direct current DC buses (8, 10) connectable at a first end to an energy source (4) and at a second end to a load (6);

a third DC bus (12);

a DC/DC converter (14) comprising:

first and second controllable semiconductor devices (16, 18) connected in series between the second and third DC buses (10, 12), each semiconductor device (16, 18) including a semiconductor switch ($S_1$, $S_2$) and an anti-parallel connected diode ($D_1$, $D_2$), and

a reactor (20) connected at a first end to the first DC bus (8) and at a second end to a junction (22) of the series-connected first and second semiconductor devices (16, 18);

a DC energy store (26) connected between the second and third DC buses (10, 12) and connected in parallel with the series-connected first and second semiconductor devices (16, 18); and

a controller (28) configured to control switching of the series-connected first and second semiconductor devices (16, 18), wherein the controller (28) is configured to operate in a protective mode in which one of the series-connected first or second semiconductor devices (16, 18) is turned off whilst the other one of the series-connected first or second semiconductor devices (16, 18) is constantly turned on, such as to create a short circuit current path between the first and second DC buses (8, 10) of the power converter system (2).

2. A power converter system (2) according to claim 1, wherein the DC/DC converter (14) further comprises a capacitor (24) connected between the second and third DC buses (10, 12) in parallel with the DC energy store (26) and the series-connected first and second semiconductor devices (16, 18).

3. A power converter system (2) according to claim 1 or claim 2, further comprising a third controllable semiconductor switch ($S_3$) connected between the first and second DC buses (8, 10), in parallel with the reactor (20) and the second semiconductor switch ($S_2$).

4. A power converter system (2) according to claim 3, further comprising a resistor (R) connected in series with the third semiconductor switch ($S_3$).

5. A power converter system (2) according to any preceding claim, wherein the first DC bus (8) further comprises a blocking diode ($D_3$) and optionally a fourth controllable semiconductor device ($S_4$) connected in anti-parallel with the blocking diode ($D_3$).

6. A power converter system (2) according to claim 5, wherein the reactor (20) of the DC/DC converter (14) is connected to the first DC bus (8) on the energy source-side of the blocking diode ($D_3$).

7. A power system (1) comprising:

the power converter system (2) according to any preceding claim;

an energy source (4) connected to the first end of the first and second DC buses (8, 10); and

a load (6) connected to the second end of the first and second DC buses (8, 10).

8. A power system (1) according to claim 7, wherein the energy source (4) has a high internal impedance.

9. A power system (1) according to claim 7 or claim 8, wherein the energy source comprises one or more DC energy sources (30a, 30b, ..., 30n) and/or one or more AC energy sources.

10. A power system (1) according to claim 9, wherein each DC energy source comprises a solar photovoltaic PV panel or an array of PV panels (30a, 30b, ..., 30n), a flow battery or a fuel cell and/or each AC energy source comprises an electrical machine.

11. A power system (1) according to any of claims 7 to 10, wherein the load comprises one or more DC loads and/or one or more AC loads.

12. A power system (1) according to claim 11, wherein each DC load comprises a battery, a flow battery, a fuel cell, a capacitor or an ultracapacitor and/or each AC load comprises an electrical machine.

13. A power system (1) according to any of claims 7 to 10, wherein the load comprises an AC power network or utility grid (32) connected to a grid-side converter (34).

14. A method of operating a power converter system (2) according to any of claims 1 to 6 in a protective mode, wherein the first and second semiconductor devices (16, 18) are switched according to a pulse width modulation PWM control scheme with a switching period and switching frequency, where:

$t1$ is the time for which the second semiconductor switch ($S_2$) is turned off during each switching period,

$t2$ is the time for which the second semiconductor switch ($S_2$) is turned on during each switching period, and

($t1 + t2$) is the switching period,
where the method comprises the steps of:

increasing $t2$ beyond a level that is associated with maximum power transfer into the DC energy store (26), and optionally until $t1$ is substantially zero, and
decreasing the switching frequency of the PWM control scheme to zero so that the second semiconductor switch ($S_2$) is constantly turned on to create a short circuit current path between the first and second DC buses (8, 10) of the power converter system (2).

15. A method according to claim 14, wherein the power converter system (2) further comprises a third controllable semiconductor switch ($S_3$) connected between the first the second DC buses (8, 10), and wherein the method comprises the step of turning on the third semiconductor switch ($S_3$) to create an additional short circuit current path between the first and second DC buses (8, 10) of the power converter system (2).

**Patentansprüche**

1. Stromrichtersystem (2), Folgendes umfassend:

einen ersten und einen zweiten Gleichstrom(direct current - DC)-Bus (8, 10), die an einem ersten Ende mit einer Energiequelle (4) und an einem zweiten Ende mit einer Last (6) schaltbar sind;
einen dritten DC-Bus (12);
einen DC/DC-Wandler (14), Folgendes umfassend:

eine erste und eine zweite steuerbare Halbleitervorrichtung (16, 18), die in Reihe zwischen dem zweiten und dem dritten DC-Bus (10, 12) geschaltet sind, wobei jede Halbleitervorrichtung (16, 18) einen Halbleiterschalter ($S_1$, $S_2$) und eine antiparallel geschaltete Diode ($D_1$, $D_2$) beinhaltet, und eine Drossel (20), die an einem ersten Ende mit dem ersten DC-Bus (8) und an einem zweiten Ende mit einer Verbindungsstelle (22) der in Reihe geschalteten ersten und zweiten Halbleitervorrichtung (16, 18) geschaltet ist;
einen DC-Energiespeicher (26), der zwischen dem zweiten und dem dritten DC-Bus (10, 12) geschaltet und parallel zu der in Reihe geschalteten ersten und zweiten Halbleitervorrichtung (16, 18) geschaltet ist; und

eine Steuerung (28), die konfiguriert ist, um das Schalten der in Reihe geschalteten ersten und zweiten Halbleitervorrichtung (16, 18) zu steuern, wobei die Steuerung (28) konfiguriert ist, um in einem Schutzmodus betrieben zu werden, in dem eine der in Reihe geschalteten ersten oder zweiten Halbleitervorrichtung (16, 18) ausgeschaltet ist, während die andere der in Reihe geschalteten ersten oder zweiten Halbleitervorrichtung (16, 18) permanent eingeschaltet ist, um etwa einen Kurzschlussstrompfad zwischen dem ersten und dem zweiten DC-Bus (8, 10) des Stromrichtersystems (2) zu erzeugen.

2. Stromrichtersystem (2) nach Anspruch 1, wobei der DC/DC-Wandler (14) ferner einen Kondensator (24) umfasst, der zwischen dem zweiten und dem dritten DC-Bus (10, 12) parallel zu dem DC-Energiespeicher (26) und der in Reihe geschalteten ersten und zweiten Halbleitervorrichtung (16, 18) geschaltet ist.

3. Stromrichtersystem (2) nach Anspruch 1 oder Anspruch 2, ferner umfassend einen dritten steuerbaren Halbleiterschalter ($S_3$), der zwischen dem ersten und dem zweiten DC-Bus (8, 10) parallel zu der Drossel (20) und dem zweiten Halbleiterschalter ($S_2$) geschaltet ist.

4. Stromrichtersystem (2) nach Anspruch 3, ferner umfassend einen Widerstand (R), der in Reihe mit dem dritten Halbleiterschalter ($S_3$) geschaltet ist.

5. Stromrichtersystem (2) nach einem der vorhergehenden Ansprüche, wobei der erste DC-Bus (8) ferner eine Sperrdiode ($D_3$) und optional eine vierte steuerbare Halbleitervorrichtung ($S_4$), die antiparallel zu der Sperrdiode ($D_3$) geschaltet ist, umfasst.

6. Stromrichtersystem (2) nach Anspruch 5, wobei die Drossel (20) des DC/DC-Wandlers (14) auf der Energiequellenseite der Sperrdiode ($D_3$) mit dem ersten DC-Bus (8) geschaltet ist.

7. Stromversorgungssystem (1), Folgendes umfassend:

das Stromrichtersystem (2) nach einem der vorhergehenden Ansprüche;
eine Energiequelle (4), die mit dem ersten Ende des ersten und des zweiten DC-Busses (8, 10) geschaltet ist; und
eine Last (6), die mit dem zweiten Ende des ersten und des zweiten DC-Busses (8, 10) geschaltet ist.

8. Stromversorgungssystem (1) nach Anspruch 7, wobei die Energiequelle (4) eine hohe interne Impedanz aufweist.

**9.** Stromversorgungssystem (1) nach Anspruch 7 oder Anspruch 8, wobei die Energiequelle eine oder mehrere DC-Energiequellen (30a, 30b, ..., 30n) und/oder eine oder mehrere AC-Energiequellen umfasst.

**10.** Stromversorgungssystem (1) nach Anspruch 9, wobei jede DC-Energiequelle ein Solar-Photovoltaik(PV)-Paneel oder eine Anordnung von PV-Paneelen (30a, 30b, ..., 30n), eine Flussbatterie oder eine Brennstoffzelle umfasst und/oder jede AC-Energiequelle eine elektrische Maschine umfasst.

**11.** Stromversorgungssystem (1) nach einem der Ansprüche 7 bis 10, wobei die Last eine oder mehrere DC-Lasten und/oder eine oder mehrere AC-Lasten umfasst.

**12.** Stromversorgungssystem (1) nach Anspruch 11, wobei jede DC-Last eine Batterie, eine Flussbatterie, eine Brennstoffzelle, einen Kondensator oder einen Ultrakondensator umfasst und/oder jede AC-Last eine elektrische Maschine umfasst.

**13.** Stromversorgungssystem (1) nach einem der Ansprüche 7 bis 10, wobei die Last ein AC-Stromnetz oder -Versorgungsnetz (32) umfasst, das mit einem netzseitigen Umrichter (34) geschaltet ist.

**14.** Verfahren zum Betreiben eines Stromrichtersystems (2) nach einem der Ansprüche 1 bis 6 in einem Schutzmodus, wobei die erste und die zweite Halbleitervorrichtung (16, 18) gemäß einem Pulsweitenmodulations(PWM)-Steuerschema mit einer Schaltperiode und einer Schaltfrequenz geschaltet werden, wobei:

t1 die Zeit ist, für die der zweite Halbleiterschalter ($S_2$) während jeder Schaltperiode ausgeschaltet ist,
t2 die Zeit ist, für die der zweite Halbleiterschalter ($S_2$) während jeder Schaltperiode eingeschaltet ist, und
(t1 + t2) die Schaltperiode ist,
wobei das Verfahren die folgenden Schritte umfasst:

Erhöhen von t2 über ein Niveau hinaus, das einer maximalen Stromübertragung in den DC-Energiespeicher (26) zugeordnet ist, und optional bis t1 im Wesentlichen Null ist und
Verringern der Schaltfrequenz des PWM-Steuerschemas auf Null, sodass der zweite Halbleiterschalter ($S_2$) permanent eingeschaltet ist, um einen Kurzschlussstrompfad zwischen dem ersten und dem zweiten DC-Bus (8, 10) des Stromrichtersystems (2) zu erzeugen.

**15.** Verfahren nach Anspruch 14, wobei das Stromrichtersystem (2) ferner einen dritten steuerbaren Halbleiterschalter ($S_3$) umfasst, der zwischen dem ersten und dem zweiten DC-Bus (8, 10) geschaltet ist, und wobei das Verfahren den Schritt des Einschaltens des dritten Halbleiterschalters ($S_3$) umfasst, um einen zusätzlichen Kurzschlussstrompfad zwischen dem ersten und dem zweiten DC-Bus (8, 10) des Stromrichtersystems (2) zu erzeugen.

## Revendications

**1.** Système de convertisseur de puissance (2), comprenant :

un premier et un deuxième bus à courant continu, CC, (8, 10) pouvant être connectés, à une première extrémité, à une source d'énergie (4), et à une seconde extrémité, à une charge (6) ;
un troisième bus CC (12) ;
un convertisseur continu-continu, CC-CC, (14) comprenant :

un premier et un second dispositifs à semi-conducteurs pouvant être commandés (16, 18) connectés en série entre le deuxième et le troisième bus CC (10, 12), chaque dispositif à semi-conducteurs (16, 18) comprenant un commutateur à semi-conducteurs ($S_1$, $S_2$) et une diode connectée en antiparallèle ($D_1$, $D_2$), et
un réacteur (20) connecté, à une première extrémité, au premier bus CC (8), et à une seconde extrémité, à une jonction (22) du premier et du second dispositifs à semi-conducteurs (16, 18) connectés en série ;
un accumulateur d'énergie CC (26) connecté entre le deuxième et le troisième bus CC (10, 12) et connecté en parallèle avec le premier et le second dispositifs à semi-conducteurs (16, 18) connectés en série ; et

un dispositif de commande (28) configuré pour commander la commutation du premier et du second dispositifs à semi-conducteurs (16, 18) connectés en série, dans lequel le dispositif de commande (28) est configuré pour fonctionner dans un mode de protection dans lequel l'un du premier et du second dispositifs à semi-conducteurs (16, 18) connectés en série est hors tension tandis que l'autre du premier et du second dispositifs à semi-conducteurs (16, 18) connectés en série est constamment sous tension, de manière à créer un trajet de courant de court-circuit entre le premier et le deuxième bus CC (8, 10) du système de convertisseur de puissance (2).

2. Système de convertisseur de puissance (2) selon la revendication 1, dans lequel le convertisseur CC-CC (14) comprend en outre un condensateur (24) connecté entre le deuxième et le troisième bus CC (10, 12) en parallèle avec l'accumulateur d'énergie CC (26) et les premier et second dispositifs à semi-conducteurs (16, 18) connectés en série.

3. Système de convertisseur de puissance (2) selon la revendication 1 ou 2, comprenant en outre un troisième commutateur à semi-conducteurs pouvant être commandé ($S_3$) connecté entre le premier et le deuxième bus CC (8, 10), en parallèle avec le réacteur (20) et le deuxième commutateur à semi-conducteurs ($S_2$).

4. Système de convertisseur de puissance (2) selon la revendication 3, comprenant en outre une résistance (R) connectée en série avec le troisième commutateur à semi-conducteurs ($S_3$).

5. Système de convertisseur de puissance (2) selon l'une quelconque des revendications précédentes, dans lequel le premier bus CC (8) comprend en outre une diode de blocage ($D_3$) et, éventuellement, un quatrième dispositif à semi-conducteurs pouvant être commandé ($S_4$) connecté en antiparallèle avec la diode de blocage ($D_3$).

6. Système de convertisseur de puissance (2) selon la revendication 5, dans lequel le réacteur (20) du convertisseur CC-CC (14) est connecté au premier bus CC (8) du côté source d'énergie de la diode de blocage ($D_3$).

7. Système d'alimentation (1) comprenant :

le système de convertisseur de puissance (2) selon l'une quelconque des revendications précédentes ;
une source d'énergie (4) connectée à la première extrémité du premier et du deuxième bus CC (8, 10) ; et
une charge (6) connectée à la seconde extrémité du premier et du deuxième bus CC (8, 10).

8. Système d'alimentation (1) selon la revendication 7, dans lequel la source d'énergie (4) a une impédance interne élevée.

9. Système d'alimentation (1) selon la revendication 7 ou 8, dans lequel la source d'énergie comprend une ou plusieurs sources d'énergie CC (30a, 30b, ..., 30n) et/ou une ou plusieurs sources d'énergie à courant alternatif, CA.

10. Système d'alimentation (1) selon la revendication 9, dans lequel chaque source d'énergie CC comprend un panneau solaire photovoltaïque, PV, ou un réseau de panneaux PV (30a, 30b, ..., 30n), une batterie à circulation ou une pile à combustible, et/ou chaque source d'énergie CA comprend une machine électrique.

11. Système d'alimentation (1) selon l'une quelconque des revendications 7 à 10, dans lequel la charge comprend une ou plusieurs charges CC et/ou une ou plusieurs charges CA.

12. Système d'alimentation (1) selon la revendication 11, dans lequel chaque charge CC comprend une batterie, une batterie à circulation, une pile à combustible, un condensateur ou un supercondensateur, et/ou chaque charge CA comprend une machine électrique.

13. Système d'alimentation (1) selon l'une quelconque des revendications 7 à 10, dans lequel la charge comprend un réseau d'alimentation CA ou un réseau électrique public (32) connecté à un convertisseur côté réseau électrique (34).

14. Procédé de fonctionnement d'un système de convertisseur de puissance (2) selon l'une quelconque des revendications 1 à 6 dans un mode de protection, dans lequel le premier et le second dispositifs à semi-conducteurs (16, 18) sont commutés selon un schéma de commande de modulation d'impulsions en durée, PWM, avec une période de commutation et une fréquence de commutation, où :

$t$1 est le temps pendant lequel le deuxième commutateur à semi-conducteurs ($S_2$) est hors tension pendant chaque période de commutation,
$t$2 est le temps pendant lequel le deuxième commutateur à semi-conducteurs ($S_2$) est sous tension pendant chaque période de commutation, et
($t$1 + $t$2) est la période de commutation,
où le procédé comprend les étapes de :

augmentation de $t$2 au-delà d'un niveau qui est associé à un transfert de puissance maximale dans l'accumulateur d'énergie CC (26), et éventuellement jusqu'à ce que $t$1 soit sensiblement égal à zéro, et diminution de la fréquence de commutation du schéma de commande PWM jusqu'à zéro, de sorte que le deuxième commuta-

teur à semi-conducteurs (S$_2$) est constamment sous tension pour créer un trajet de courant de court-circuit entre le premier et le deuxième bus CC (8, 10) du système de convertisseur de puissance (2).

15. Procédé selon la revendication 14, dans lequel le système de convertisseur de puissance (2) comprend en outre un troisième commutateur à semi-conducteurs pouvant être commandé (S$_3$), connecté entre le premier et le deuxième bus CC (8, 10), et dans lequel le procédé comprend l'étape de mise sous tension du troisième commutateur à semi-conducteurs (S$_3$) pour créer un trajet de courant de court-circuit supplémentaire entre le premier et le deuxième bus CC (8, 10) du système de convertisseur de puissance (2).

**FIG. 1**

EP 3 893 374 B1

FIG. 2

FIG. 3

*FIG. 4*

*FIG. 5*

*FIG. 6*

*FIG. 7*

EP 3 893 374 B1

FIG. 8

*FIG. 9*

Increase *t2* of PWM control
scheme beyond level for
maximum power transfer,
optionally *t1* is zero

Step 1

Decrease switching
frequency of PWM control
scheme to zero

Step 2

*FIG. 10*

*FIG. 11*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019092305 A1
- CN 203734364 U